# EUROPÄISCHE PATENTSCHRIFT

(11) **EP 1 728 307 B1**
(45) Veröffentlichungstag und Bekanntmachung des Hinweises auf die Patenterteilung: **16.10.2013**
(21) Anmeldenummer: 05701635.4
(22) Anmeldetag: 01.02.2005
(51) Int. Cl.: H02K 7/08, F16H 57/021, F16H 1/16, F16B 25/00, H02K 7/116

(54) **ROTATIONSANTRIEB**
ROTATION DRIVE
ENTRAINEMENT EN ROTATION

(30) Priorität: 12.03.2004 DE 102004012076
(43) Veröffentlichungstag der Anmeldung: 06.12.2006
(73) Patentinhaber: ROBERT BOSCH GMBH, 70442 Stuttgart (DE)
(72) Erfinder: SCHWENDEMANN, Franz, 77833 Ottersweier (DE)
(86) Internationale Anmeldenummer: PCT/EP2005/050429
(87) Internationale Veröffentlichungsnummer: WO 2005/088808

(56) Entgegenhaltungen:
- US-A- 3 508 593
- US-A- 3 918 345
- US-A- 4 993 277
- US-A1- 2003 172 761
- US-B1- 6 272 942

## Beschreibung

### Stand der Technik

Die Erfindung betrifft einen Rotationsantrieb mit einem Abstützelement für einen Rotor nach der Gattung des unabhängigen Anspruchs.

Mit der DE 31 505 72 A1 ist eine Antriebseinheit bekannt geworden, bei der die Fertigungstoleranzen zwischen der Ankerwelle und dem diese lagernden Gehäuse mittels einer Einstellschraube eliminiert werden. Dazu weist das Gehäuse ein Innengewinde auf, in das die Einstellschraube mittels eines Außengewindes eingreift. Zum Spielausgleich der Ankerwelle wird die Einstellschraube mit einer Anschlagsfläche mit einer vorbestimmten Anpresskraft gegen die Stirnseite der Rotorwelle geschraubt.

Bei einer solchen Vorrichtung ist das Anformen eines Gewindes sowohl an dem Gehäuse, als auch an der Einstellschraube relativ aufwendig. Außerdem ist nach dem Einstellen einer vordefinierten Anpresskraft ein weiterer Arbeitsgang zur drehfesten Fixierung der Einstellschraube notwendig, beispielsweise wird die Schraube festgeklebt oder ein zusätzliches Sicherungselement montiert.

Die US 6,272942 B1 zeigt ein Antriebseinheit, bei der ein Kugellager einer Ankerwelle mittels eines Abstützrings axial fixiert wird. Hierzu wird der Abstützring über einen Stift gegen das Kugellager gepresst, wobei der Stift mittels Materialumformung in eine Öffnung im Getriebegehäuse eingepresst wird.

In der US 3,918,345 ist eine selbstfurchende Schraube offenbart, die einen unrunden Umfang des Gewindes aufweist.

### Vorteile der Erfindung

Die erfindungsgemäße Vorrichtung mit den Merkmalen des unabhängigen Anspruchs 1 hat den Vorteil, dass durch das Ausbilden von selbstschneidenden Stegen an dem Abstützelement dieses in einem Arbeitsgang in einer Bohrung des Gehäuses fest fixiert werden kann. Dabei entfällt sowohl das Anformen eines Innengewindes am Gehäuseteil, als auch die zusätzliche Drehfixierung des Abstützelements in einem weiteren Arbeitsgang. Somit wird mittels eines einzigen Bauteils eine spielfreie, selbstsichernde Ankeraxialeinstellung geschaffen, die auch hohe Ankeraxialkräfte abstützen kann. Das Gehäuse weist dazu noch im Bereich der Stirnseite der Rotorwelle eine Durchgangsbohrung auf, an deren Umfang abschnittsweise radiale Aussparungen ausgeformt sind, so daß das Abstützelement axial mit einer vorbestimmten Anpresskraft in die Durchgangsbohrung eingeführt und gegen die Stirnseite der Rotorwelle gepresst werden kann. Durch eine Drehung des Abstützelements um einen gewissen Winkelbereich erfolgt dann ein Formschluss zwischen den selbstfurchenden Stegen und dem Gehäuse, der das Abstützelement gegen axiales Verschieben und gegen eine Verdrehung sichert.

Durch die in den Unteransprüchen angegebenen Maßnahmen sind vorteilhafte Weiterbildungen der Vorrichtung nach dem unabhängigen Anspruch möglich. Sind die radialen Stege am äußeren Rand eines zylindrischen Grundkörpers des Abstützelements angeordnet, so bilden diese Stege einen Formschluss mit dem den Grundkörper umgebenden Gehäuseteil. Durch die Wahl der radialen Länge der Stege kann der Bereich der überlappenden Durchmesser zwischen den Stegen und der Bohrung des Gehäuses auf die auftretenden Axialkräfte des Ankers angepasst werden. Die radialen Stege sind dabei vorteilhaft näherungsweise senkrecht zur Zylinderachse angeordnet. Im Gegensatz zum Gewinde einer Einstellschraube weisen die Stege über ihren Umfang keine Gewindesteigung auf. Dadurch resultiert beim Einwirken einer axialen Kraft auf das Abstützelement keine Komponente in Umfangsrichtung, wodurch diese radialen Stege eine zuverlässige Sicherung gegen Verdrehung darstellen.

Außerdem wird eine unerwünschte axiale Verschiebung beim Eindrehen verhindert.

Werden die radialen Stege als Winkelsegmente um den Grundkörper ausgebildet, die sich weder berühren noch überlappen, können diese Stege zur Montage des Abstützelements in einfacher Weise in entsprechende radiale Aussparungen der Gehäusebohrung axial eingeführt werden. Bei einer Drehung des Abstützelements um eine Winkel entsprechend des Betrags des Winkelsegments der Stege (oder etwas mehr), schneiden sich die Stege in das Gehäusematerial zwischen dessen radialen Aussparungen ein, wodurch eine axiale Abstützung des Ankers geschaffen wird.

Je nach Durchmesser des Grundkörpers des Abstützelements und dem Betrag der auftretenden auf das Abstützelement einwirkenden Axialkräfte können an den Grundkörper beispielsweise zwei oder vier sich jeweils gegenüberliegende Stege - oder aber drei oder mehr - gleichmäßig über den Umfang verteilt angeformt werden. Dazu sind an dem Gehäuse eine korrespondierende Anzahl von vorzugsweise nierenförmigen radialen Aussparungen angeformt, in die die jeweiligen Stege zur Montage axial eingeschoben werden.

In einer weiteren Ausführung des erfindungsgemäßen Rotationsantriebs sind an dem Abstützelement die radialen Stege in mehreren axial voneinander getrennt liegenden Ebenen, die näherungsweise senkrecht zur Zylinderachse verlaufen, angeordnet. Dabei liegen die zwei oder mehr radiale Stege pro Ebene jeweils im gleichen Winkelbereich wie die radialen Stege der nächsten Ebene, so dass die radialen Stege der verschiedenen Ebenen zur Montage jeweils axial in die selbe radiale Aussparung des Gehäuses eingeführt werden können.

In einer weiteren Ausführung des erfindungsgemäßen Rotationsantriebs können die Stege über ihren Umfang keine Gewindesteigung aufweisen.

Hierzu ist das Gehäuse des Rotationsantriebs zumindest im Bereich der Bohrung aus Kunststoff oder Weichmetall hergestellt. Dadurch können die radialen Stege, die vorzugsweise aus Hartmetall - beispielsweise Stahl - gefertigt sind, unter Aufwendung einer relativ geringen Drehkraft in das Spritz- oder Druckgussgehäuse eindringen.

Von Vorteil ist es hierbei, wenn die radialen Stege an ihrer Kante, mit der sie bei einer Verdrehung des Abstützelements an den Gehäuseteil anliegen, eine scharfe, selbstfurchende Schneidkante aufweisen, die bei einer Drehung eine entsprechend Furche im Gehäuseteil ausschneidet. Um das Abstützelement im Betrieb gegen eine Zurück-Drehung zu sichern, sind in einer weiteren, der ersten Bande gegenüberliegenden Kante Sicherungsbereiche, beispielsweise in Form eines Grats angeformt, die sich beim Zurückdrehen des Abstützelements in die Wände der eingeschnittenen Furche des Gehäuses eingraben.

In einer weiteren Ausführung ist die Stirnfläche des Rotors, insbesondere der Rotorwelle, kugelförmige ausgebildet, so dass diese Stirnfläche einen gewissen Radius aufweist. Stützt sich der Rotor über eine solche gewölbte Stirnfläche an einer ebenen Anschlagsfläche des Abstützelements ab, kann die Reibung im Drehbetrieb des Rotors deutlich reduziert werden, wodurch der Wirkungsgrad gesteigert wird.

Zur leichten Montage des Abstützelements weist dieses ein formschlüssiges Mitnahmeelement auf, das formschlüssig mit einem Montagewerkzeug zusammenwirkt, um das Abstützelement in der Gehäusebohrung zu verdrehen.

### Zeichnungen

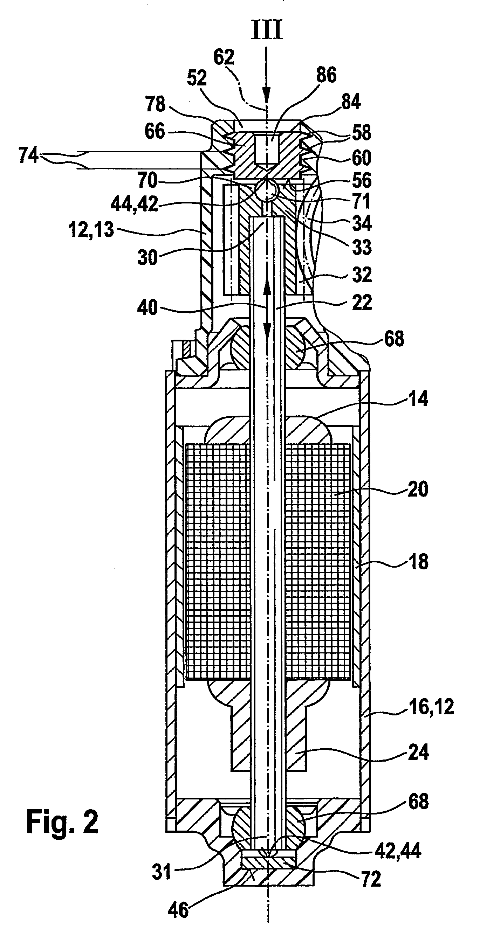

In den Zeichnungen sind verschiedene Ausführungsbeispiele einer erfindungsgemäßen Vorrichtung dargestellt und in der nachfolgenden Beschreibung näher erläutert. Es zeigen
Figur 1
   ein Schnitt durch ein Rotationsantrieb mit einem erfindungsgemäßen Abstützelement,
Figur 2
   ein weiteres Ausführungsbeispiel eines Rotationsantriebs in gleicher Darstellung
Figur 3
   eine Draufsicht gemäss III des Rotationsantriebs aus Figur 2 und
Figur 4
   eine weitere Ausführung eines Abstützelements in unmontiertem Zustand.

### Beschreibung

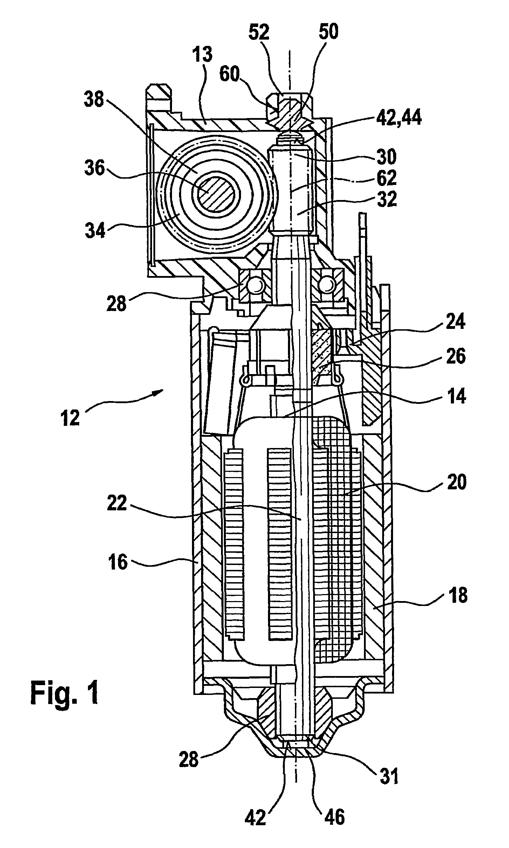

In Figur 1 ist als Rotationsantrieb 10 ein Elektromotor 10 dargestellt, der ein in einem Gehäuse 12 gelagerten Rotor 14 aufweist Das Gehäuse 12 weist beispielsweise einen ein Gehäuseteil 13 bildenden Poltopf 16 auf, in dem Permanentmagneten 18 angeordnet sind, die mit elektrischen Wicklungen 20 zusammenwirken, die auf einer Rotorwelle 22 des Rotors 14 angeordnet sind. Auf der Rotorwelle 22 ist desweiteren ein Kollektor 24 zur Kommutierung der elektrischen Wicklungen 20 angeordnet. Der Kollektor 24 wird über Bürsten 26 mit Strom versorgt, die am Gehäuse 12 angeordnet sind. Auf der Rotorwelle 22 sind Kugel- oder Gleitlager 28 angeordnet, mit denen die Rotorwelle 22 zumindest radial gelagert ist. An einem Ende 30 der Rotorwelle 22 ist auf dieser eine Schnecke 32 angeordnet, die mit einem Schneckenrad 34 in Eingriff steht. Das Schneckenrad 34 ist beispielsweise auf einem feststehenden Bolzen 36 gelagert und mit einem Abtriebselement 38 verbunden, das beispielsweise Sitzteil eines Kraftfahrzeugsitzes verstellt. Bei der Kraftübertragung über den Zahneingriff zwischen der Schnecke 32 und dem Schneckenrad 34 wirkt auf die Rotorwelle 22 eine Axialkraft 40, die je nach Drehrichtung des Elektromotors 10 in der Figur 1 nach oben oder nach unten gerichtet ist. Der Rotor 14 weist hierbei an beiden Enden 30, 31 der Rotorwelle 22 Stirnflächen 42 auf, die beispielsweise einstückig an der Rotorwelle 22 angeformt sind. Diese sind beispielsweise mittels Materialumformung auch als gewölbte Anlaufkuppen mit einem Radius 44 ausgebildet. Der Rotor 14 stützt sich an einem Ende 31 direkt an einer Innenwand 46 des Gehäuses 12, und mit dem anderen Ende 30 an einem separaten Abstützelement 50, das am Gehäuse 12 befestigt ist, ab. Das Abstützelement 50 wird nach der Montage des Antriebs 10 durch eine Durchgangsbohrung 52 im Gehäuse 12 axial gegen die Stirnfläche 42 gepresst, so dass diese unter einer vorgebbaren Anpresskraft 54 an einer Anschlagsfläche 56 des Abstützelements 50 anliegt. Dadurch können fertigungsbedingte Toleranzen zwischen der Rotorwelle 22 und dem aus verschiedenen Gehäuseteilen 13 zusammengesetzten Gehäuse 12 ausgeglichen werden. Zur axialen Fixierung weist das Abstützelement 50 an einem Grundkörper 66 angeformte radiale Stege 58 auf, die formschlüssig in eine Wand 60 der Bohrung 52 greifen. Die radialen Stege 58, die näherungsweise zu einer Zylinderachse 62 des Grundkörpers 66 bzw. der Rotorwelle 22 angeordnet sind, weisen eine selbstschneidende Kante 64 auf, mit der sich die radialen Stege 58 in das Material des Gehäuses 12 einschneiden.

Figur 2 zeigt eine vergrößerte Darstellung eines weiteren Ausführungsbeispiels eines Elektromotors 10, bei dem die Rotorwelle 22 mittels Kalottenlager 68 im Gehäuse 12 gelagert ist. Der Kollektor 24 der hierbei nur schematisch dargestellt ist, ist zwischen den elektrischen Wicklungen 22 und dem unteren Ende des Polgehäuses 16 angeordnet In einer alternativen Ausführung kann der Elektromotor 10 auch elektrisch kommutiert sein. An dem Ende 30 der Rotorwelle 22 ist auf dieser eine als separates Bauteil ausgeführte Schnecke 32 drehfest fixiert, die wiederum mit einem - nur teilweise dargestelltem - Schneckenrad 34 kämmt. Die Schnecke 32 weist im Ausführungsbeispiel einen Hut 33 auf, an dem sich das axiale Ende 30 der Rotorwelle 22 abstützt, so dass die Verbindung zwischen der Schnecke 32 und Rotorwelle 22 nur Drehmomente und keine Axialkräfte aufnehmen muss. An einem Ende 70 der Schnecke 32, beziehungsweise des Huts 33 ist als Stirnfläche 42 des Rotors 14 eine Kugel 71 mit dem Radius 44 angeordnet, mit der sich der Rotor 14 an der Anschlagsfläche 56 des Abstützelements 50 abstützt Somit werden die bei der Kraftübertragung zwischen der Schnecke 32 und dem Schneckenrad 34 auftretenden Axialkräfte 40 - analog wie in der Ausführung gemäss Figur 1- über die beiden Stirnflächen 42 einerseits am Gehäuse 12 (über eine Anlaufscheibe 72) und andererseits an der axial einstellbaren Anschlagsfläche 56 des Abstützelements 50 abgestützt. Die selbstfurchenden radialen Stege 58 sind hierbei in drei beabstandeten Ebenen 74 angeordnet, die in etwa senkrecht zur Zylinderachse 62 verlaufen. Anders als bei einem Gewinde einer Einstellschraube weisen die radialen Stege 58 über ihren Umfang 76 keine Steigung auf. Beim Eindrehen der selbstschneidenden radialen Stege 58 in die Wandung 60 des Gehäuseteils 13 entsteht daher kein spiralförmiger Gewindegang, sondern separate ringförmige Furchen 78, die jeweils vollständig in einer Ebene 74 mit einer konstanten Flächenormalen liegen. Das Abstützelement 50 weist den zylindrischen Grundkörper 66 auf, der einerseits die Durchgangsbohrung 52 im Gehäuse 12 verschließt An einem äußerem Umfang 82 des Grundkörpers 66 sind die radialen Stege 58 vorzugsweise einstücktig angeformt. An der der Anschlagsfläche 56 gegenüberliegende Seite 84 weist das Abstützelement 50 ein Mitnahmeelement 86 auf, in das formschlüssig beispielsweise ein Außen-Vielkant eingreifen kann, um das Abstützelement 50 zu dessen Montage um einen bestimmten Winkelbereich zu verdrehen.

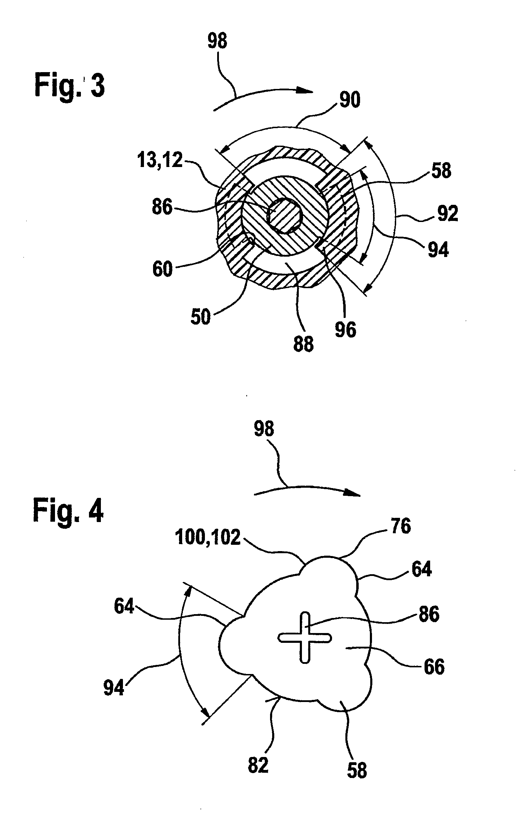

In Figur 3 ist der Rotationsantrieb 10 aus Figur 2 gemäss einer Ansicht nach III dargestellt. Das Gehäuse 12 weist hier beispielsweise ein Getriebegehäuse 13 auf, das aus Kunststoff mittels Spritzgussverfahren hergestellt ist. In dem Gehäuseteil 13 ist in Richtung der Zylinderachse 62 eine Bohrung 52 angeordnet, die weitere zusätzliche radiale Aussparungen 88 im Gehäuseteil 13 aufweist. Im Ausführungsbeispiel erstrecken sich die beiden radialen Aussparungen 88 näherungsweise über einen Winkelbereich 90 von etwa 90 Grad, und liegen sich derart gegenüber, dass zwischen den beiden Aussparungen 88 in Umfangsrichtung korrespondierende Winkelbereiche 92 angeordnet sind, die die Innenwand 60 der Bohrung 52 bilden. In diese Bohrung 52 mit den radialen Aussparungen 88 wird zur Montage des Abstützelements 50 dieses mit seinen radialen Stegen 58 axial in die Bohrung 52 eingeführt und mit einer Anpresskraft 54 gegen die Stirnfläche 42 des Rotors 14 gepresst. Während der Montage wird die Rotorwelle 22 vorzugsweise vertikal ausgerichtet, so dass der Rotor 14 aufgrund seines Eigengewichts mit seinem einem Ende 31 an den dem Abstützelement 50 gegenüberliegenden Wand 46 des Gehäuses 12 anliegt. Ist eine vorbestimmte Anpresskraft 54 des Abstützelements 50 erreicht, wird dieses mittels eines Montagewerkzeugs, das formschlüssig in das Mitnahmeelement 86 - beispielsweise ein Innen-Vielkant - eingreift, um einen bestimmten Winkel verdreht. Dabei schneiden sich die radialen Stege 58 mit der selbstschneidenden Kante 64 in die Gehäusewand 60 ein. Die radialen Stege 58 erstrecken sich hierbei über einen Winkelbereich 94, der kleiner ist als der Winkelbereich 90 der radialen Aussparung 88, damit das Abstützelement 50 axial in die Bohrung 52 bei der Montage einführbar ist. Der Winkelbereich 94 der radialen Stege 58 ist außerdem kleiner als der Winkelbereich 92 der Wandung 60, damit die radialen Stege 58 nach der Montage vollständig innerhalb der Wandung 60 angeordnet sind. Dadurch dass die radialen Stege 58 nicht ganz bis zur nächsten Aussparung 88 gedreht werden, bildet ein Teil der Wandung 60 einen Sicherungsbereich 96, der einen Anschlag über die radialen Stege 58 bildet, der ein weiteres Verdrehen des Abtriebselements 50 verhindert.

In Figur 4 ist ein Abstützelement 50 eines weiteren Ausführungsbeispiel vor dessen Montage in das Gehäuse 12 dargestellt. Das Abstützelement 50 weist drei Winkelbereiche 94 mit radialen Stegen 58 auf, zwischen denen über den Umfang 82 des Grundkörpers 66 mindestens genau so große Winkelbereiche ohne radiale Stege 58 angeordnet sind. Zur Montage wird das Abstützelement 50 in Montage-Drehrichtung 98 um einen Winkelbereich verdreht, der in etwa dem Winkelbereich 94 der radialen Stege 58 entspricht. Damit sich die radialen Stege 58 leicht in die Wandung 60 einschneiden, weisen die radialen Stege 58 die selbstfurchende Kante 64 auf, die bei der Montage in Drehrichtung 98 in der Wandung 60 zum Anliegen kommt. An der in Umfangsrichtung gegenüberliegende Kante 100 der radialen Stege 58 (entgegen Drehrichtung 98), weisen diese Sperrelemente 102 auf. Die Sperrelemente 102 sind beispielsweise als scharfkantige Grate 102 ausgebildet, die sich beim Zurückdrehen des Abstützelements 50 während des Betriebs im Material des Gehäuses 12 festkrallen. Als Mitnahmeelement 86 weist das Abstützelement 50 einen Kreuzschlitz 86 auf, in das ein entsprechendes Montagewerkzeug formschlüssig zu dessen Verdrehung in Drehrichtung 98 eingreift. Die Anzahl der radialen Stege 58 in einer Ebene 74 ist nicht auf zwei oder drei beschränkt, sondern kann auch vier oder mehr betragen. Ebenso kann die Ausformung der Kanten 64 und 102 variiert, insbesondere der Materialkombination zwischen den radialen Stegen 58 und der Gehäusewand 60 angepasst werden (beispielsweise nierenfömig). Wesentlich ist dabei, dass die Stege 58 in einer Ebene 74 in etwa senkrecht der Zylinderachse 62 bzw. parallel zur Anschlagsfläche 56 angeordnet sind (ohne Steigung an ihren Umfang 76), da dann eine auf das Abstützelement wirkende Axialkraft 40 nicht zu einer Drehbewegung des Abstützelements 50 führt. Vorzugsweise wird das Abstützelement 50 aus Metall gefertigt, wobei die Anschlagsfläche 56 zur Erhöhung deren Lebensdauer gehärtet wird.

Es sei angemerkt, dass hinsichtlich der in allen Figuren und in der Beschreibung dargestellten Ausführungsbeispiele viele Kombinationsmöglichkeiten untereinander möglich sind. Insbesondere kann die Anzahl und die Form der radialen Stege 58 sowie der korrespondierenden Aussparungen 88, sowie die Anzahl der Ebenen 74 entsprechende auftretenden Axialkräften 40 variiert werden. Des weiteren sind die Stirnflächen 42 nicht auf kugelförmige gewölbte Flächen beschränkt, sondern können beliebige Anlaufflächen des Rotors 14 bzw. dessen Rotorwelle 22 darstellen. Anstelle der Schnecke 32 können auf der Rotorwelle 22 auch andere Getriebebauteile, wie beispielsweise ein Stirnzahnrad mit gerader oder schräger Außenverzahnung angeordnet sein, die an ihrem axialen Ende 30 ebenfalls einen Hut 33 zu Rotorwellenabstützung aufweisen können. Das Abstützelement 50 kann wahlweise am Getriebegehäuse 12 oder am Ende des Poltopfs 16 angeordnet werden. Eine solche erfindungsgemäße spielfreie, selbstsichernde Ankeraxialeinstellung eignet sich besonders für die Verwendung in Stellantrieben im Kraftfahrzeug, ist jedoch nicht auf eine solche Anwendung beschränkt.

## Patentansprüche

1. Rotationsantrieb (10), insbesondere zum Verstellen eines beweglichen Teils im Kraftfahrzeug, mit einem in einem Gehäuse (12, 13) gelagerten Rotor (14), der sich mit mindestens einer Stirnseite (42) axial an einem Abstützelement (50) abstützt, das formschlüssig am Gehäuse (12, 13) befestigt ist, **dadurch gekennzeichnet, dass** das Abstützelement (50) radiale Stege (58) aufweist, die selbstfurchend in das Gehäuse (12, 13) eindrehbar sind, und das Gehäuse (12,13) eine Durchgangsbohrung (52) mit daran angeformten radialen Aussparungen (88) aufweist, in die die Stege (58) des Abstützelements (50) zu dessen Montage axial einführbar sind.

2. Rotationsantrieb (10) nach Anspruch 1, **dadurch gekennzeichnet, dass** das Abstützelement (50) einen eine Zylinderachse (62) aufweisenden zylinderförmigen Grundkörper (60) aufweist, an dessen äußerem Umgang (82) die Stege (58) in einer Ebene (74) näherungsweise senkrecht zur Zylinderachse (62) angeordnet sind.

3. Rotationsantrieb (10) nach einem der Ansprüche 1 oder 2, **dadurch gekennzeichnet, dass** die Stege (58) tangential beabstandet angeordnet sind und sich über einen Winkelbereich (94) erstrecken, der ein Bruchteil des ganzen Umfangs (82) beträgt.

4. Rotationsantrieb (10) nach einem der vorhergehenden Ansprüche, **dadurch gekennzeichnet, dass** über den Umgang (82) zwei, drei oder vier Stege (58), insbesondere zwei sich radial gegenüberliegende nierenförmige Stege (58), angeordnet sind.

5. Rotationsantrieb (10) nach einem der vorhergehenden Ansprüche, **dadurch gekennzeichnet, dass** die Stege (58) in mehreren axial beabstandeten Ebenen (74) angeordnet sind.

6. Rotationsantrieb (10) nach einem der vorhergehenden Ansprüche, **dadurch gekennzeichnet, dass** die Stege (58) über ihren Umfang keine Gewindesteigung aufweisen.

7. Rotationsantrieb (10) nach einem der vorhergehenden Ansprüche, **dadurch gekennzeichnet, dass** das Gehäuse (12,13) einen Befestigungsbereich (60) für das Abstützelement (50) aufweist, der aus einem weicheren Material als die Stege gefertigt ist, beispielsweise aus Kunststoff oder Leichtmetallen wie Aluminium, Magnesium oder Zink.

8. Rotationsantrieb (10) nach einem der vorhergehenden Ansprüche, **dadurch gekennzeichnet, dass** die Stege (58) eine erste scharfe Schneide-Kante (64) aufweisen, die sich beim Drehen in einer Montagerichtung (98) in das Gehäuse (12, 13) einschneidet, und die Stege (58) eine zweite Kante (100) mit Sperrelementen (102) - insbesondere mit einem Grat - aufweisen, die sich beim Drehen entgegen der Montagerichtung (98) im Gehäuse (12, 13) festkrallt.

9. Rotationsantrieb (10) nach einem der vorhergehenden Ansprüche, **dadurch gekennzeichnet, dass** die Stirnfläche (42) des Rotors (14) einen Radius (44) aufweist, der an einer ebenen Anschlagsfläche (56) anliegt, die am Abstützelement (50) angeformt ist.

10. Rotationsantrieb (10) nach einem der vorhergehenden Ansprüche, **dadurch gekennzeichnet, dass** das Abstützelement (50) an der der Anschlagsfläche (56) gegenüberliegender Seite (84) eine formschlüssige Mitnahme (86) - beispielsweise einen Innen-Vielkant oder einen Kreuzschlitz - zur Übertragung eines Drehmoments bei der Montage des Abstützelements (50) aufweist.

## Claims

1. Rotational drive (10), in particular for adjusting a movable part in the motor vehicle, having a rotor (14) which is mounted in a housing (12, 13) and is supported axially with at least one end side (42) on a supporting element (50) which is fastened to the housing (12, 13) in a positively locking manner, **characterized in that** the supporting element (50) has radial webs (58) which can be screwed into the housing (12, 13) in a self-tapping manner, and the housing (12, 13) has a through hole (52) with radial cut-outs (88) which are formed integrally thereon and into which the webs (58) of the supporting element (50) can be introduced axially in order to mount the said supporting element (50).

2. Rotational drive (10) according to Claim 1, **characterized in that** the supporting element (50) has a cylindrical main body (60) which has a cylinder axis (62) and on the outer circumference (82) of which the webs (58) are arranged in a plane (74) approximately perpendicularly with respect to the cylinder axis (62).

3. Rotational drive (10) according to either of Claims 1 and 2, **characterized in that** the webs (58) are arranged spaced apart tangentially and extend over an angular region (94) which is a fraction of the entire circumference (82).

4. Rotational drive (10) according to one of the preceding claims, **characterized in that** two, three or four webs (58), in particular two kidney-shaped webs (58) which lie radially opposite one another, are arranged over the circumference (82).

5. Rotational drive (10) according to one of the preceding claims, **characterized in that** the webs (58) are arranged in a plurality of planes (74) which are spaced apart axially.

6. Rotational drive (10) according to one of the preceding claims, **characterized in that** the webs (58) do not have a thread pitch over their circumference.

7. Rotational drive (10) according to one of the preceding claims, **characterized in that** the housing (12, 13) has a fastening region (60) for the supporting element (50), which fastening region (60) is manufactured from a softer material than the webs, for example from plastic or lightweight metals such as aluminium, magnesium or zinc.

8. Rotational drive (10) according to one of the preceding claims, **characterized in that** the webs (58) have a first sharp cutting edge (64) which cuts into the housing (12, 13) during screwing in a mounting direction (98), and the webs (58) have a second edge (100) with locking elements (102), in particular with a ridge, which second edge (100) engages fixedly in the housing (12, 13) during screwing counter to the mounting direction (98).

9. Rotational drive (10) according to one of the preceding claims, **characterized in that** the end face (42) of the rotor (14) has a radius (44) which bears against a planar stop face (56) which is formed integrally on the supporting element (50).

10. Rotational drive (10) according to one of the preceding claims, **characterized in that**, on the side (84) which lies opposite the stop face (56), the supporting element (50) has a positively locking catch means (86), for example a polygon socket or a cross recess, for the transmission of a torque during mounting of the supporting element (50).

## Revendications

1. Entraînement en rotation (10), en particulier pour le réglage d'une partie mobile dans un véhicule automobile, comprenant un rotor (14) monté dans un boîtier (12, 13), lequel rotor s'appuie axialement par au moins un côté frontal (42) contre un élément de support (50), lequel élément de support est fixé par engagement positif sur le boîtier (12, 13), **caractérisé en ce que** l'élément de support (50) présente des nervures radiales (58) qui peuvent s'enfoncer d'elles-mêmes par rotation dans le boîtier (12, 13) et le boîtier (12, 13) présente un alésage traversant (52) muni d'évidements radiaux (88) façonnés sur celui-ci, dans lesquels les nervures (58) de l'élément de support (50) peuvent être introduites axialement en vue du montage de ce dernier.

2. Entraînement en rotation (10) selon la revendication 1, **caractérisé en ce que** l'élément de support (50) présente un corps de base cylindrique (60) présentant un axe de cylindre (62), sur la périphérie extérieure (82) duquel corps de base les nervures (58) sont disposées dans un plan (74) approximativement perpendiculairement à l'axe de cylindre (62).

3. Entraînement en rotation (10) selon l'une quelconque des revendications 1 ou 2, **caractérisé en ce que** les nervures (58) sont disposées de manière espacée tangentiellement et s'étendent sur une plage angulaire (94) qui constitue une fraction de la périphérie totale (82).

4. Entraînement en rotation (10) selon l'une quelconque des revendications précédentes, **caractérisé en ce que** deux, trois ou quatre nervures (58), en particulier deux nervures en forme de haricot (58) radialement opposées sont disposées sur la périphérie (82).

5. Entraînement en rotation (10) selon l'une quelconque des revendications précédentes, **caractérisé en ce que** les nervures (58) sont disposées dans plusieurs plans (74) espacés axialement.

6. Entraînement en rotation (10) selon l'une quelconque des revendications précédentes, **caractérisé en ce que** les nervures (58) ne présentent aucun pas de filetage sur leur périphérie.

7. Entraînement en rotation (10) selon l'une quelconque des revendications précédentes, **caractérisé en ce que** le boîtier (12, 13) présente une région de fixation (60) pour l'élément de support (50), laquelle région de fixation est fabriquée à partir d'un matériau plus tendre que les nervures, par exemple en plastique ou en métaux légers tels que de l'aluminium, du magnésium ou du zinc.

8. Entraînement en rotation (10) selon l'une quelconque des revendications précédentes, **caractérisé en ce que** les nervures (58) présentent une première arête de coupe acérée (64) qui entaille le boîtier (12, 13) lors de la rotation dans une direction de montage (98), et les nervures (58) présentent une deuxième arête (100) avec des éléments d'arrêt (102) - en particulier avec une bavure -, laquelle deuxième arête s'ancre fixement dans le boîtier (12, 13) lors de la rotation dans le sens opposé à la direction de montage (98).

9. Entraînement en rotation (10) selon l'une quelconque des revendications précédentes, **caractérisé en ce que** la surface frontale (42) du rotor (14) présente un rayon (44) qui s'applique contre une surface de butée plane (56) qui est façonnée sur l'élément de support (50).

10. Entraînement en rotation (10) selon l'une quelconque des revendications précédentes, **caractérisé en ce que** l'élément de support (50) présente, au niveau du côté (84) opposé à la surface de butée (56), un entraînement par engagement positif (86) - par exemple un polygone à pans creux ou une fente cruciforme - pour transférer un couple lors du montage de l'élément de support (50).
